Europäisches Patentamt

European Patent Office

Office européen des brevets

(19)

(11) **EP 1 239 953 B1**

(12) **EUROPÄISCHE PATENTSCHRIFT**

(45) Veröffentlichungstag und Bekanntmachung des Hinweises auf die Patenterteilung:
**12.05.2004 Patentblatt 2004/20**

(51) Int Cl.⁷: **B01J 20/26**, B01J 20/24, E02B 3/10

(21) Anmeldenummer: **00991626.3**

(22) Anmeldetag: **22.12.2000**

(86) Internationale Anmeldenummer:
**PCT/EP2000/013163**

(87) Internationale Veröffentlichungsnummer:
**WO 2001/047629 (05.07.2001 Gazette 2001/27)**

(54) **SCHUTZVORRICHTUNG GEGEN WASSEREINWIRKUNG**

PROTECTIVE DEVICE AGAINST THE EFFECTS OF WATER

DISPOSITIF ASSURANT UNE PROTECTION CONTRE LES EFFETS DE L'EAU

(84) Benannte Vertragsstaaten:
**AT BE CH CY DE DK ES FI FR GB GR IE IT LI LU MC NL PT SE TR**

(30) Priorität: **23.12.1999 DE 19962600**

(43) Veröffentlichungstag der Anmeldung:
**18.09.2002 Patentblatt 2002/38**

(73) Patentinhaber: **BASF AKTIENGESELLSCHAFT 67056 Ludwigshafen (DE)**

(72) Erfinder:
• **DREHER, Stefan**
  **67433 Neustadt (DE)**

• **PAKUSCH, Joachim**
  **67346 Speyer (DE)**
• **SANDOR, Mario**
  **67283 Obrigheim (DE)**

(74) Vertreter: **Kinzebach, Werner, Dr. et al Reitstötter, Kinzebach & Partner, Postfach 21 11 60 67011 Ludwigshafen (DE)**

(56) Entgegenhaltungen:
**EP-A- 0 072 569        EP-A- 0 131 312
DE-A- 4 440 236**

EP 1 239 953 B1

**Beschreibung**

Die Erfindung betrifft eine Schutzvorrichtung gegen Wassereinwirkung mit verbesserter mechanischer Festigkeit und Wasserdichtigkeit.

Bei Gefahr eines Deichbruchs, z. B. bei schweren Sturmfluten, werden zur akuten Deichsicherung in der Regel Schutzvorrichtungen in Form von Sandsäcken eingesetzt. Diese bestehen im Allgemeinen aus einem unverrottbaren Polyestermaterial, das mit Sand gefüllt ist. Sandsäcke dienen zur Sicherung von Deichen bei flächiger Aufweichung, zum Anlegen von Quellkaden oder zur Errichtung von Behelfsdämmen im Falle eines Deichbruchs. Durch die Stapelung der Sandsäcke entsteht zunächst eine mechanisch feste Wasserbarriere. Da die Sandsäcke jedoch keine wasserdichten Systeme darstellen, kommt es bei länger anhaltender Wassereinwirkung zu einer Permeation des Wassers in den Sandsack. Dieser Prozess führt zu zwei nachteiligen Eigenschaften von Sandsäcken bzw. Sandsackdämmen, nämlich zu einem allmählichen Verlust der Barrierewirkung, weil Wasser in immer stärkerem Maße durch das poröse System migriert, und zu einem allmählichen Verlust der mechanischen Festigkeit, so dass vor allem bei stärkeren Wasserbewegungen (Wellen, Strömung) die Sandsäcke abgetragen werden können.

Es sind somit Sandsäcke wünschenswert, mit denen Dämme mit hoher Wasserdichtigkeit und mechanischer Festigkeit errichtet werden können.

Zur Modifizierung von Sandsäcken für diesen Zweck sind bereits eine Reihe von Ansätzen bekannt. Die europäische Patentschrift EP 0 131 312 beschreibt Sandsäcke, die mit einem Gemisch aus Sand und einem wasserabsorbierenden Polymer (Superabsorber) gefüllt sind. Das Gewichtsverhältnis Polymer zu Sand beträgt 2:1 bis 10:1, und bevorzugt werden vernetzte Polymerisate auf Basis von (Meth)acrylsäure verwendet. Die Säcke werden nur zu ca. 10 Vol.-% gefüllt, damit bei Wassereinwirkung Raum zur Quellung des Polymers vorhanden ist. Vorteilhaft an diesen Sandsäcken ist ihr intrinsisches Wasserrückhaltevermögen, das geringe Gewicht (vor Wassereinwirkung) sowie die erhöhte Dichtigkeit gegenüber Wasser nach Quellung.

In der JP-08060633 werden ähnliche Sandsäcke beschrieben. Das wasserabsorbierende Material ist dabei ein vernetztes Copolymerisat auf Basis von N-Vinylacetoamid. Die EP 0 072 569 nennt als Füllungen für Sandsäcke Zusammensetzungen aus einem wasserunlöslichen anorganischen Pulver (Magnesium und Calciumcarbonat, Calciumsilikat u. a.) und einem wasserabsorbierenden Polymerisat. Dieses enthält mindestens 40 Gew.-% carbonsäuregruppenhaltige Monomere und ist vernetzt mit einem Polyamin, z. B. Polyethylenimin. Sandsäcke, gefüllt mit einem Gemisch aus einem wasserabsorbierenden Polymer und (organischen oder anorganischen) Fasern werden in der JP-92023926 beschrieben.

Es sind auch Sandsäcke bekannt, die ausschließlich wasserabsorbierende Polymerisate enthalten und auf eine anorganische Komponente wie Sand vollständig verzichten. Die JP-5918969 beschreibt derartige Systeme auf Basis von vernetzten Poly(meth)acrylsäure Polymerisaten. In der EP 0 368 107 werden vernetzte Polyacrylsäure, Isobuten-Maleinsäure-Copolymere und hydrolysiertes Polyacrylnitril, jeweils gepfropft mit Stärke, genannt. Vorteilhaft haben diese sandfreien Säcke im Vergleich zu den Sand enthaltenden Sandsäcken ein geringeres Gewicht sowie eine höhere Wasseraufnahmekapazität. Die mechanische Festigkeit von Behelfsdämmen, die mit sandfreien Säcken errichtet werden, ist jedoch vergleichsweise gering. Die WO 95/21876 beschreibt die Verwendung von wasserabsorbierenden Copolymerisaten als Füllmaterial für Sandsäcke. Die Copolymerisate bestehen aus (1) N-Isopropylacrylamid oder Diethylacrylamid, (2) Acrylsäure oder deren Alkalisalzen, (3) Diacetonacrylamid oder Acrylamid und (4) einem Vernetzer. Vorteilhaft an diesen Polymeren ist ihre Fähigkeit, das aufgenommene Wasser bei höheren Temperaturen wieder abgeben zu können, so dass eine begrenzte Wiederverwendung der Sandsäcke möglich ist.

Durch die Verwendung von wasserabsorbierenden Polymeren als Füllmaterial für Sandsäcke wird deren Barrierewirkung kurzzeitig erhöht, da sie ein eigenes Wasseraufnahmevermögen besitzen und die Quellung des Füllmaterials zu einer erhöhten Dichtigkeit führt. Der mechanische Zusammenhalt der Sandsäcke wird durch das Quellen jedoch nicht erhöht, so dass die Einwirkung von Wellen oder Strömungen zu einem Einsturz des Sandsackdamms führen kann.

Aufgabe der vorliegenden Erfindung ist es somit, eine Schutzvorrichtung gegen Wassereinwirkung bereitzustellen, die eine verbesserte Dichtigkeit gegenüber Wasser sowie einen erhöhten mechanische Zusammenhalt besitzt.

Überraschenderweise wurde erfindungsgemäß gefunden, dass durch die Verwendung eines Gemischs aus Sand und redispergierbaren filmbildenden Polymer-Dispersionspulvern sowie gegebenenfalls anderen Stoffen als Füllmaterial für Sandsäcke sowohl deren Wasserdichtigkeit als auch deren mechanischer Zusammenhalt stark verbessert wird.

Die Erfindung betrifft somit eine Schutzvorrichtung gegen Wassereinwirkung mit einer zumindest teilweise wasserdurchlässigen Hülle, die ein Gemisch aus Sand und einem wasserunlöslichen, filmbildenden synthetischen Polymerpulver einschließt, wobei das Polymer eine Glasübergangstemperatur von weniger als 50 °C aufweist.

Bei der Permeation des Wassers in das Innere des Sandsacks kommt es zu einer Redispergierung des Polymerpulvers und einer allmählichen Verfilmung. Der gebildete Polymerfilm führt zu einer erhöhten Dichtigkeit des Polymer-Sand-Gefüges gegen Wasser. Gleichzeitig wird ein "Verkleben" der einzelnen Sandsäcke erreicht, was in einer hohen mechanischen Festigkeit des Sandsackdammes resultiert.

Das Polymer weist vorzugsweise eine Glasübergangstemperatur ($T_g$) im Bereich von -50 °C bis +30 °C, insbesondere zwischen -40 °C bis +20 °C, auf.

Für die Erzielung der gewünschten Glasübergangstemperaturen $T_g$ durch Auswahl geeigneter Arten und Mengen von Monomeren ist die Formel von Fox (T. G. Fox, Bull. Amer. Physic. Soc. (Ser. II) 1,123 (1956)) hilfreich, nach der für die Glasübergangstemperatur $T_g$ von Copolymerisaten in guter Näherung gilt:

$$\frac{1}{T_g} = \frac{X^1}{T_g^1} + \frac{X^2}{T_g^2} + \cdots\cdots + \frac{X^S}{T_g^S}$$

worin $X^1$, $X^2$ ...$X^S$ die Massenbrüche der Monomeren, $T_g^1$, $T_g^2$ ... $T_g^S$ die Glasübergangstemperaturen der jeweils nur aus einem der Monomeren 1,2,...S aufgebauten Homopolymerisate in Grad Kelvin bedeuten.

Als Polymer sind alle wasserunlöslichen synthetischen Polymere geeignet, sofern die $T_g$ < +50 °C ist. Vorzugsweise handelt es sich um ein redispergierbares Polymerpulver, das insbesondere aus einer wässrigen Dispersion der Polymere gewonnen wird. Die Gewinnung derartiger Polymerpulver ist dem Fachmann bekannt. Beispielsweise erfolgt sie durch Sprühtrocknung oder Gefriertrocknung der wässrigen Polymerdispersionen.

Die erfindungsgemäß zur Anwendung kommenden Polymere sind vorzugsweise aufgebaut aus mindestens einem der folgenden Monomere:

- Estern einer α,β-ethylenisch ungesättigten $C_3$-$C_6$-Monocarbonsäure oder $C_4$-$C_8$-Dicarbonsäure mit einem $C_1$-$C_8$-Alkanol. Vorzugsweise handelt es sich dabei um Ester der Acrylsäure oder Methacrylsäure, wie Methyl(meth)acrylat, Ethyl(meth)acrylat, n-Butyl(meth)acrylat, t-Butyl(meth)acrylat, 2-Ethylhexyl(meth)acrylat etc.;

- vinylaromatischen Verbindungen, wie Styrol, 4-Chlorstyrol, 2-Methylstyrol etc.;

- vinylestern aliphatischer Carbonsäuren, wie Vinylacetat, Vinylpropiat, Vinyllaurat, Vinylstearat, Versaticsäurevinylester etc.;

- Olefinen, wie Ethylen oder Propylen;

- konjugierten Diolefinen, wie Butadien oder Isopren;

- Acrylnitril oder Methacrylnitril;

- Vinylchlorid oder Vinylidenchlorid.

Vorzugsweise kann das Polymer auch bis zu 5 Gew.-%, vorzugsweise 0,1 bis 4 Gew.-%, einer α,β-ethylenisch ungesättigten $C_3$-$C_6$-Monocarbonsäure, vorzugsweise Acrylsäure oder Methacrylsäure, einpolymerisiert enthalten.

Besonders bevorzugt handelt es sich bei dem Polymer um ein Homooder Copolymerisat aus (Meth)acrylaten, ein Copolymerisat aus mindestens einem (Meth)acrylat und Styrol, ein Copolymerisat aus Butadien und Styrol oder ein Copolymerisat aus Vinylacetat und Ethylen. Als (Meth)acrylat werden besonders bevorzugt Methylmethacrylat, Ethylacrylat, n-Butylacrylat und 2-Ethylhexylacrylat eingesetzt.

Vorzugsweise umfasst die Schutzvorrichtung ≤ 20 Gew.-%, insbesondere 2 bis 15 Gew.-%, Polymerpulver, bezogen auf die Menge des verwendeten Sands.

Neben dem Polymerpulver können auch weitere Zusätze zur Füllung der Schutzvorrichtung verwendet werden. Vorteilhaft ist dabei die Verwendung von wasserabsorbierenden Polymeren, wie im Stand der Technik bereits beschrieben, z. B. Superabsorbern, oder die Verwendung von wasserzurückhaltenden Stoffen, wie zum Beispiel Polyvinylalkohol, Gummen, wie Xanthangummi oder Cellulosederivate, insbesondere Celluloseether (Carboxymethylcellulose, Methylcellulose u.a.) und Stärke. Diese weiteren Zusätze werden vorzugsweise in einer Menge von 0,5 bis 10 Gew.-%, bezogen auf den Sand, verwendet. Durch diese Zusätze wird die Verfilmung des Polymer-Dispersionspulvers verbessert, was in einer erhöhten Dichtigkeit und Festigkeit des Dammes aus der Schutzvorrichtung resultiert.

Bei der zumindest teilweise wasserdurchlässigen Hülle handelt es sich im Allgemeinen um ein verrottbares oder nicht verrottbares Gewebe aus Naturfasern oder Kunstfasern, wie Polyester. Die Hülle kann in unterschiedlicher Form ausgestaltet sein, beispielsweise als Schlauch und insbesondere als Sack.

Die Herstellung der Schutzvorrichtung erfolgt vorteilhaft in zwei Schritten. Zuerst werden die Komponenten Sand, Polymer-Dispersionspulver und gegebenenfalls weitere Zusätze durch Zusammengeben und Mischen zu einem homogenen Schüttgut vermengt. Anschließend erfolgt das Füllen der Schutzvorrichtung. Die Lagerung erfolgt vorzugsweise in trockener Atmosphäre, um ein vorzeitiges Verfilmen des Pulvers zu verhindern, was zu einem Verblocken führen würde. Um die Lagerung in feuchter Atmosphäre für begrenzte Zeit zu möglichen, ist die Zugabe von wasserabsorbierenden Polymeren vorteilhaft.

Gegenstand der Erfindung ist auch die Verwendung eines wie oben definierten Polymerpulvers zur Verbesserung der mechanischen Festigkeit und Wasserdichtigkeit von Schutzvorrichtungen gegen Wassereinwirkung, insbesondere Sandsäcken. Weiter betrifft die Erfindung ein Verfahren zur Verbesserung der mechanischen Festigkeit und Wasserdichtigkeit von Schutzvorrichtungen gegen Wassereinwirkung, insbesondere Sandsäcken, wobei man ein Gemisch aus Sand und einem wie oben definierten Polymerpulver bereitstellt, das Gemisch in eine zumindest teilweise wasserdurchlässige Hülle füllt, und die Schutzvorrichtung in geeigneter Weise ausbringt, beispielsweise als Sperre gegen Wassereinwirkung durch Aufeinanderstapeln.

Die folgenden Beispiele sollen die Erfindung, allerdings ohne sie zu beschränken, erläutern.

Beispiele:

Es wurden Gemische unter Verwendung folgender Komponenten hergestellt:

- Normsand 1 gemäß DIN EN 196

- Acronal S 430 P, einem redispergierbaren Polymer-Dispersionspulver der Fa. BASF auf Basis eines Styrol-n-Butylacrylat-Copolymerisats mit einer Glasübergangstemperatur von $T_g$ = -15 °C und einer Mindestfilmbildetemperatur von 0 °C

- Vinnapas RE 545 Z, einem redispergierbarem Polymer-Dispersionspulver der Fa. Wacker auf Basis eines Ethylen-Vinylacetat-Copolymerisats mit einer Mindestfilmbildetemperatur von 0 °C (Glasübergangstemperatur: -5 °C)

- Aqualic CA L 400, einem wasserabsorbierenden Polymer der Fa. BASF auf Basis einer teilvernetzten Polyacrylsäure (Natriumsalz)

Tabelle 1 zeigt die Zusammensetzungen der hergestellten Gemische:

Tabelle 1:

| Zusammensetzungen der Polymer-Sand-Gemische | | | | |
|---|---|---|---|---|
| Probe | Normsand 1 [Gew.-%] | Acronal S 430P [Gew.-%] | Vinnapas RE 545Z [Gew.-%] | Aqualic CA L400 [Gew.-%] |
| 1 | 90 | 10 | - | - |
| 2 | 90 | - | 10 | - |
| 3 | 88 | 10 | - | 2 |
| V-1 | 100 | - | - | - |
| V-2 | 30 | - | - | 70 |
| V-3 | - | - | - | 100 |

Es wurde die Sperrwirkung dieser Gemische gegenüber Wasser sowie deren mechanische Festigkeit bei Wassereinwirkung untersucht.

(a) Sperrwirkung gegenüber Wasser

Die jeweiligen Gemische wurden in 2 000 ml-Standzylinder (Glas) bis zur 1 500 ml-Marke gefüllt und durch manuelles Klopfen, Stoßen und Drücken verdichtet. Anschließend wurde die Sandsäule mit 500 ml vollentsalztem Wasser überschichtet. Das Wasser wurde vorher zur besseren Erkennbarkeit des Migrationsverhaltens mit wenigen Tropfen Bromthymolblau eingefärbt. Es wurde die Zeit ermittelt, die das Wasser benötigte, um durch Permeation der Sandsäule den Boden des Standzylinders zu erreichen. Um statistische Schwankungen auszugleichen, wurden die Versuche je 5-mal wiederholt.

(b) Mechanische Festigkeit bei Wassereinwirkung

Je 200 g der jeweiligen Gemische wurden in rechteckige Polyester-Textil-Säcke (8 x 5 cm$^2$) gefüllt. Je 10 dieser Säcke wurden in einer Metallwanne aufeinandergelegt. Anschließend wurde der Stapel 2 Stunden mit vollentsalztem Wasser überschichtet (2 cm überstehende Wassersäule). Nach dem Abgießen des Wassers und zweistündigem Trocknen des Stapels bei Raumtemperatur wurde der mechanische Zusammenhalt der Säcke geprüft. Dieser wurde mit Noten von sehr hoch (durch einfaches Ziehen nicht zu trennen) bis sehr gering (keine Haftung zwischen den Säcken) benotet. Die erhaltenen Ergebnisse sind in Tabelle 2 zusammengestellt.

Es zeigt sich, dass die Polymer-Dispersionspulver enthaltenden Sandfüllungen zu einer stark erhöhten Dichtigkeit gegenüber Wasser führten. Gegenüber der Vergleichsprobe V-1 (ohne Polymerisatzusatz) verlängerten sich die Migrationszeiten bei 10 Gew.-% Polymerisatzusatz um mehr als das Zehnfache. Weiterhin ergibt sich, dass es durch das Verfilmen des Polymerisatpulvers zu einem (erwünschten) Verblocken der einzelnen Sandsäcke kommt. Die ausschließlich mit Sand gefüllten Säcke (Vergleichsprobe V-1) zeigten nach Wasserlagerung keinerlei mechanischen Zusammenhalt, wie auch die Probe mit 70 Gew.-% Zusatz eines wasserabsorbierenden Polymers (Vergleichsprobe V-2 gemäß EP 0 131 312). Auch die Säcke, die ausschließlich mit wasserabsorbierendem Polymer gefüllt waren (Vergleichsprobe V-3 gemäß JP-5918969), zeigten nach Wasserlagerung keinen mechanischen Zusammenhalt.

Tabelle 2:

| Wasserdichtigkeit und mechanische Festigkeit der Polymer-Sand-Gemische | | | |
|---|---|---|---|
| Probe | Migrationszeit [min] | Mechan. Festigkeit | Bemerkungen |
| 1 | 425 ± 18 | sehr hoch | - |
| 2 | 390 ± 15 | hoch | - |
| 3 | 452 ± 16 | sehr hoch | - |
| V-1 | 32 ± 5 | sehr gering | - |
| V-2 | - | sehr gering | Wasser bei Migrationstest vollständig absorbiert |
| V-3 | - | sehr gering | Wasser bei Migrationstest vollständig absorbiert |

**Patentansprüche**

1. Schutzvorrichtung gegen Wassereinwirkung mit einer zumindest teilweise wasserdurchlässigen Hülle, die ein Gemisch aus Sand und einem wasserunlöslichen, redispergierbaren, synthetischen, filmbildenden Polymerpulver einschließt, wobei das Polymer eine Glasübergangstemperatur von weniger als 50 °C aufweist.

2. Schutzvorrichtung nach Anspruch 1, wobei das Polymer eine Glasübergangstemperatur im Bereich von -50 °C bis +30 °C aufweist.

3. Schutzvorrichtung nach Anspruch 2, wobei das Polymer eine Glasübergangstemperatur im Bereich von -40 °C bis +20 °C aufweist.

4. Schutzvorrichtung nach einem der vorhergehenden Ansprüche, wobei das Polymer unter (Meth)acrylat-Polymeren, Styrol-(Meth)acrylat-Copolymeren, Styrol-Butadien-Copolymeren und Ethylen-Vinylacetat-Copolymeren ausgewählt ist.

5. Schutzvorrichtung nach einem der vorhergehenden Ansprüche, wobei das Polymerpulver in einer Menge von weniger als 20 Gew.-%, bezogen auf den Sand, enthalten ist.

6. Schutzvorrichtung nach Anspruch 5, wobei das Polymerpulver in einer Menge von 2 bis 15 Gew.-%, bezogen auf den Sand, enthalten ist.

7. Schutzvorrichtung nach einem der vorhergehenden Ansprüche, wobei die Schutzvorrichtung zusätzlich ein superabsorbierendes Polymer umfasst.

8. Schutzvorrichtung nach einem der vorhergehenden Ansprüche, wobei die Schutzvorrichtung als weiteren Zusatz einen wasserzurückhaltenden Stoff umfasst, der ausgewählt ist unter Polyvinylalkohol, Xanthan, Stärke und Cellulosederivaten.

9. Schutzvorrichtung nach einem der Ansprüche 7 oder 8, wobei das superabsorbierende Polymer und/oder der wasserzurückhaltende Stoff in einer Menge von jeweils bis zu 10 Gew.-%, bezogen auf den Sand, enthalten ist.

10. Verwendung eines Polymerpulvers, wie in einem der Ansprüche 1 bis 9 definiert, zur Verbesserung der mechanischen Festigkeit und Wasserdichtigkeit von Schutzvorrichtungen gegen Wassereinwirkung, insbesondere Sandsäcken.

## Claims

1. A water containment bag comprising an at least partially water-pervious wall material enclosing a mixture of sand and a water-insoluble redispersible synthetic film forming polymer powder having a glass transition temperature of below 50°C.

2. The device of claim 1, wherein the polymer has a glass transition temperature in the range from -50°C to +30°C.

3. The device of claim 2, wherein the polymer has a glass transition temperature in the range from -40°C to +20°C.

4. The device of any of the preceding claims, wherein the polymer is selected from the group consisting of (meth) acrylate polymers, styrene-(meth)acrylate copolymers, styrene-butadiene copolymers and ethylene-vinyl acetate copolymers.

5. The device of any of the preceding claims, wherein the polymer powder is present in an amount of less than 20% by weight, based on the sand.

6. The device of claim 5, wherein the polymer powder is present in an amount of from 2 to 15% by weight, based on the sand.

7. The device of any of the preceding claims, further comprising a superabsorbent polymer.

8. The device of any of the preceding claims, further comprising a water-retaining material selected from the group consisting of polyvinyl alcohol, xanthan, starch and cellulose derivatives.

9. The device of either of claims 7 and 8, wherein the superabsorbent polymer and/or the water-retaining material is present in an amount in each case of up to 10% by weight, based on the sand.

10. The method of using a polymer powder as defined in any of claims 1 to 9 to improve the mechanical strength and watertightness of water containment bags, especially sandbags.

## Revendications

1. Dispositif de protection contre l'influence de l'eau comprenant une enveloppe au moins partiellement perméable à l'eau, qui comporte un mélange de sable et de poudre de polymère insoluble dans l'eau, redispersable, synthétique, filmogène, le polymère présentant une température de transition vitreuse inférieure à 50°C.

2. Dispositif de protection suivant la revendication 1, dans lequel le polymère présente une température de transition vitreuse de l'ordre de -50°C à +30°C.

3. Dispositif de protection suivant la revendication 2, dans lequel le polymère présente une température de transition vitreuse de l'ordre de -40°C à +20°C.

4. Dispositif de protection suivant l'une des revendications précédentes, dans lequel le polymère est choisi parmi des polymères de (méth)acrylate, des copolymères de styrène-(méth)acrylate, des copolymères de styrène-butadiène et des copolymères d'éthylène-acétate de vinyle.

**5.** Dispositif de protection suivant l'une des revendications précédentes, dans lequel la poudre de polymère est contenue en une quantité inférieure à 20% en poids, par rapport au sable.

**6.** Dispositif de protection suivant la revendication 5, dans lequel la poudre de polymère est contenue en une quantité de 2 à 15% en poids, par rapport au sable.

**7.** Dispositif de protection suivant l'une des revendications précédentes, dans lequel le dispositif de protection comporte en supplément un polymère superabsorbant.

**8.** Dispositif de protection suivant l'une des revendications précédentes, dans lequel le dispositif de protection comporte, comme autre additif, une substance de rétention d'eau, qui est choisie parmi de l'alcool polyvinylique, du xanthane, de l'amidon et des dérivés de cellulose.

**9.** Dispositif de protection suivant l'une des revendications 7 et 8, dans lequel le polymère superabsorbant et/ou la substance de rétention d'eau est contenu en une quantité de chaque fois jusqu'à 10% en poids par rapport au sable.

**10.** Utilisation d'une poudre de polymère, telle que définie dans l'une des revendications 1 à 9, pour améliorer la résistance mécanique et l'étanchéité à l'eau de dispositifs de protection contre l'influence de l'eau, en particulier de sacs à sable.